# EUROPEAN PATENT APPLICATION

(11) **EP 4 040 113 A2**
(43) Date of publication of application: **10.08.2022**
(21) Application number: 22180693.8
(22) Date of filing: 23.06.2022
(51) Int. Cl.: G01C 21/36

(54) **METHOD AND APPARATUS FOR ROAD GUIDANCE, AND ELECTRONIC DEVICE**

(30) Priority: 28.06.2021 CN 202110722668
(71) Applicant: Apollo Intelligent Connectivity (Beijing) Technology Co., Ltd., Beijing 100176 (CN)
(72) Inventor: HUANG, Yupu, Beijing, 100176 (CN); LI, Yinghui, Beijing, 100176 (CN); LI, Zhanbin, Beijing, 100176 (CN)
(74) Representative: advotec.

(57) **Abstract**

The disclosure provides a method and an apparatus for road guidance, an electronic device and a storage medium, which relates to technical fields of intelligent traffic, autonomous driving, augmented reality, etc. The method includes: acquiring driving data and navigation data of a vehicle; determining a road guidance type of the vehicle based on the driving data and the navigation data, and generating road guidance data corresponding to the road guidance type; and performing 3D rendering on the road guidance data, and visually displaying the road guidance data in an image collected by the vehicle for road guidance. In the disclosure, various types of road guidance data may be provided to construct a virtual reality effect. The virtual road guidance data and the actual scene are combined, thus enhancing a visual effect, enhancing driving safety, and causing that the user has a better experience.

## Description

### TECHNICAL FIELD

The disclosure relates to a field of data processing, and particularly to technical fields of intelligent traffic, autonomous driving, augmented reality, etc.

### BACKGROUND

Augmented reality (AR) is a technology for increasing a user's perception to a real world through information provided by a computer system. The virtual information may be applied to the real world. In the related art, AR navigation of a vehicle may combine the virtual information with a road scene to visually display traffic data, which provides a road guidance for a user.

### SUMMARY

The disclosure provides a method and an apparatus for road guidance, an electronic device and a storage medium.

According to a first aspect of the disclosure, a method for road guidance includes: acquiring driving data and navigation data of a vehicle; determining a road guidance type of the vehicle based on the driving data and the navigation data, and generating road guidance data corresponding to the road guidance type; and performing 3D rendering on the road guidance data, and visually displaying the road guidance data in an image collected by the vehicle for road guidance.

According to a second aspect of the disclosure, an apparatus for road guidance is provided, and includes: an acquiring module, configured to acquire driving data and navigation data of a vehicle; a processing module, configured to determine a road guidance type of the vehicle based on the driving data and the navigation data, and generate road guidance data corresponding to the road guidance type; and a display module, configured to perform 3D rendering on the road guidance data, and visually display the road guidance data in an image collected by the vehicle for road guidance.

According to a third aspect of the disclosure, a non-transitory computer readable storage medium stored with computer instructions is provided. When the computer instructions are executed by a computer, the computer is caused to perform the method for road guidance as described in the first aspect of the embodiment.

It should be understood that, the content described in this section is not intended to identify key or important features of embodiments of the disclosure, nor intended to limit the scope of the disclosure. Other features of the disclosure may be easy to understand through the following specification.

### BRIEF DESCRIPTION OF THE DRAWINGS

The drawings are intended to better understand the solution, and do not constitute a limitation to the disclosure.
FIG. 1 is a flowchart illustrating a method for road guidance according to an embodiment of the present disclosure.
FIG. 2 is a flowchart illustrating a method for road guidance according to another embodiment of the present disclosure.
FIG. 3 is a diagram illustrating a road guidance graph according to an embodiment of the present disclosure.
FIG. 4 is a diagram illustrating a road guidance graph according to another embodiment of the present disclosure.
FIG. 5 is a flowchart illustrating a method for road guidance according to another embodiment of the present disclosure.
FIG. 6 is a structure diagram illustrating a method for road guidance according to another embodiment of the present disclosure.
FIG. 7 is a structure diagram illustrating an apparatus for road guidance according to an embodiment of the present disclosure.
FIG. 8 is a block diagram illustrating an electronic device configured to perform a method for road guidance in the embodiment of the disclosure.

### DETAILED DESCRIPTION

Exemplary embodiments of the present disclosure are described as below with reference to the accompanying drawings, which include various details of embodiments of the present disclosure to facilitate understanding, and should be considered as merely exemplary. Similarly, for clarity and conciseness, descriptions of well-known functions and structures are omitted in the following descriptions.

For ease of understanding the disclosure, a brief explanation of the technical field referred in the disclosure is made below.

Intelligent transportation is a real-time, accurate and efficient comprehensive traffic management system established by integrating and applying advanced information technology, data communication transmission technology, electronic sensing technology, control technology, computer technology and the like to a whole ground traffic management system, which plays a role in a wide range and all directions and includes a traffic information service system and a traffic management system.

Autonomous driving adopts advanced communication, computer, network and control technologies to achieve real-time and continuous control of the vehicle. Bidirectional data communication between the vehicle and the ground may be achieved by directly facing a vehicle through a modern communication means, with a high transmission rate carrying large information amount, and a control center may acquire an exact position of the vehicle in time by following up a vehicle, so as to make operation management more flexible and control more effective, and satisfy the requirements of autonomous driving of the vehicle.

Augmented reality (AR) technology is a technology that skillfully combines virtual information and a real world, where various technical means such as multimedia, three-dimensional modeling, real-time tracking and registration, intelligent interaction and sensing are widely used. The AR technology applies the simulated virtual information to the real world, such as characters, images, three-dimensional models, music, videos and the like generated by a computer, so that information from the virtual and real worlds is supplementary to each other, thereby achieving "augmentation" of the real world.

In the related art, when the AR navigation in a vehicle visually presents the traffic data, only a simple sign is used to prompt and guide the vehicle. Such road guidance information is not comprehensive, leading to low driving safety.

The method and the apparatus for road guidance, the electronic device and the storage medium in the disclosure are described below with reference with accompanying drawings.

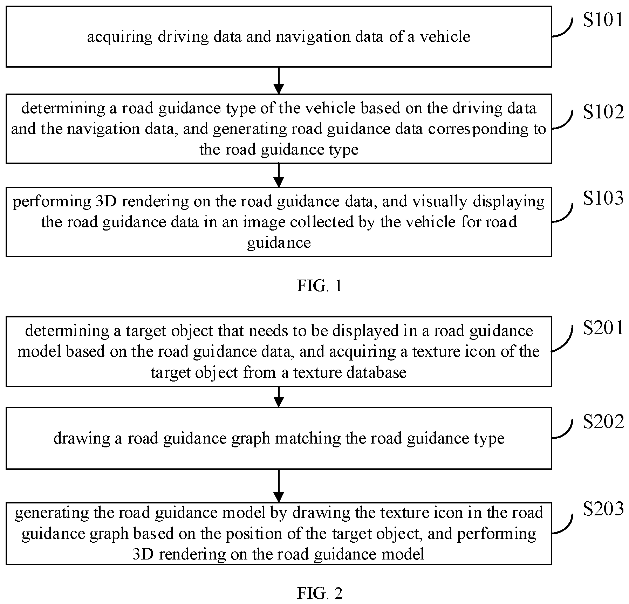

FIG. 1 is a flowchart illustrating a method for road guidance according to an embodiment of the present disclosure. As illustrated in FIG. 1, the method includes the following blocks:
At S 101, driving data and navigation data of the vehicle are acquired.

In the embodiment of the disclosure, the vehicle is mounted with an information collection apparatus. The information collection apparatus is configured to acquire driving data, and may be an electronic device with functions such as large capacity storage, multichannel data interface, video acquisition, storage and wireless transmission. In some implementations, the vehicle further has an apparatus for navigation and positioning, which is configured to acquire navigation data. In another implementations, a terminal device acquires navigation data and transmits the navigation data to the vehicle for analysis. Optionally, a transmission mode may be wired transmission, and also may be wireless transmission.

Optionally, the driving data includes but not limited to the following types: (1) driving information of the vehicle, that is, a position coordinate, a vehicle speed, a forward azimuth angle of the vehicle, a distance between the current vehicle position and the navigation destination, etc.

Optionally, the navigation data includes but not limited to the following types:
(1) navigation planned route information. The navigation planned route information is mainly composed of forward shape points of the navigation planned route, which includes a starting point, an end point of a planned route, and shape points of all planned routes, etc..
(2) forward first position point information, that is, a coordinate of a position point, a distance between the position point and the current vehicle position, a type of the position point, etc.. When the position point is an intersection, the type of the position point is mainly a steering type for vehicle driving, and includes: a go-straight, a turnaround, a left turn, a left-front turn, a right turn, a right-front turn, a roundabout entry, a roundabout exit, a branch intersection, an express way entry, an express way exit, a highway entry, a highway exit, etc..
(3) information of a position point selected and configured by the user, that is, a coordinate, a name, a type of a route point position, etc., and optionally, may further include parking space information, that is, a coordinate of the parking space position, etc.
(4) Road information, that is, information of a lane where the vehicle position is located, includes a starting point position and end point position of the lane, a width of the lane, a name of an end point, etc..

At S102, a road guidance type of the vehicle is determined based on the driving data and the navigation data, and road guidance data corresponding to the road guidance type is generated.

In some implementations, based on the driving data and the navigation data, that is, based on the navigation data such as the driving information and road information, the navigation route planning information of the vehicle, it may be determined whether the vehicle needs to change a lane at a current moment, further determining the road guidance type of the vehicle.

In some implementations, based on the driving data and the navigation data, that is, based on the driving information and the forward first position point information of the vehicle, and the navigation planned route information of the vehicle, it may be determined whether the vehicle needs to go straight or steer at the forward first intersection, further determining the road guidance type of the vehicle.

In some implementations, based on the driving data and the navigation data, that is, based on the driving information and the information of the position point selected and configured by the user, and the navigation planned route information of the vehicle, it may be determined whether the user configures a position point of interest and the distance of the position point, further determining the road guidance type of the vehicle.

After the road guidance type of the vehicle is determined, for different road guidance models, road guidance data corresponding to the road guidance type is generated. The road guidance data is configured to guide the vehicle driving.

Optionally, coordinates of a current position and a next position may be acquired in combination with the driving data and the navigation data, and road guidance data corresponding to the road guidance type may be generated by performing coordinate conversion on the coordinates of the current position and the next position.

In the embodiment of the disclosure, the road guidance type includes a lane change guidance, a straight or steering guidance, a point of interest guidance, etc. Optionally, the road guidance data may be one of lane change data, straight guidance data, steering guidance data or point of interest guidance data.

At S 103, 3D rendering is performed on the road guidance data, and the road guidance data is visually displayed in an image collected by the vehicle for road guidance.

The 3D rendering is used to render a model from a 3D model grid to a 2D image with high realistic sense in a computer calculation manner, and the calculation process includes aggregate variables such as light and auxiliary light, material and texture of a material, related settings of a camera, etc. The 3D rendering is a process in which the computer obtains and calculates original information from a 3D scene, to obtain a final result. The output is usually a single image or a series of images rendered and compiled together. Optionally, the 3D rendering may be performed on the road guidance data by a rendering engine built in a computer animation software, and the road guidance data may be visually displayed in an image collected by the vehicle for road guidance, thereby constructing a virtual reality effect to achieve road guidance, and displaying data more intuitively and easier to understand.

In some implementations, a real-time image may be projected to a front windshield, thus achieving a combination of virtual road guidance data and an actual scene, so that the user does not need to look down at a navigation map, which enhances the driving safety.

In the embodiment of the disclosure, the driving data and the navigation data of the vehicle are acquired; the road guidance type of the vehicle is determined based on the driving data and the navigation data, and the road guidance data corresponding to the road guidance type is generated; and the 3D rendering is performed on the road guidance data, and the road guidance data is visually displayed in the image collected by the vehicle for road guidance. In the embodiments of the disclosure, various types of road guidance data may be provided to construct a virtual reality effect and display data more intuitively and easier to understand. The virtual road guidance data and the actual scene are combined to enhance the visual effect, thus enhancing the driving safety, so that the user has a better experience.

On the basis of the above embodiment, determining the road guidance type of the vehicle at S102 includes the following implementations.

As a possible implementation, an actual lane line where the vehicle is located is determined based on the driving data, a planned driving direction of the vehicle is determined based on the navigation data, and it is determined that the road guidance type of the vehicle is a lane change guidance in response to the actual lane line deviating from the planned driving direction.

As a possible implementation, it is determined whether a forward position of the vehicle is an intersection and a type of the intersection based on the driving data and the navigation data; the road guidance type is determined as a straight guidance in response to the type of the intersection being a straight type; and the road guidance type is determined as a steering guidance in response to the type of the intersection being a non-straight guidance.

As a possible implementation, it is determined that a forward position of the vehicle is a specified position based on the driving data and the navigation data, and a road guidance type of the specified position is determined as a point of interest guidance.

On the basis of the above embodiment, generating road guidance data corresponding to the road guidance type at S102 includes the following implementations.

As a possible implementation, a turning point and curve information for lane change are acquired based on the driving data and the navigation data in response to the road guidance type of the vehicle being a lane change guidance; the turning point, the curve information for lane change and the navigation data are determined as the road guidance data of the vehicle.

As a possible implementation, a first coordinate of the driving position of the vehicle is determined based on the driving data in response to the road guidance type being a straight or steering guidance or a point of interest guidance; a second coordinate of the forward position of the vehicle is determined based on the navigation data; a computer visual coordinate is generated by performing coordination conversion on the first coordinate and/or the second coordinate; and the computer visual coordinate and the navigation data are determined as the road guidance data. In an embodiment, the world coordinates of the vehicle and the forward position are converted as computer visual coordinates which are indicated in the collected image, for subsequent road guidance of the vehicle.

In the embodiment of the disclosure, the road guidance type of the vehicle is determined based on the driving data and the navigation data, so as to subsequently acquire road guidance data corresponding to the road guidance type and construct a virtual reality effect, which improves the accuracy of road guidance, enhances the visual effect, and the user has a better experience.

FIG. 2 is a flowchart illustrating a method for road guidance according to another embodiment of the present disclosure. As illustrated in FIG. 2, on the basis of the above embodiment, performing 3D rendering on the road guidance data includes the following steps at S201-S203.

At S201, a target object that needs to be displayed in a road guidance model is determined based on the road guidance data, and a texture icon of the target object is acquired from a texture database.

The corresponding target object is determined based on the road guidance data, the target object being configured to indicate a display position of a road guidance graph in the road guidance model. Optionally, the target object may be a position point or a lane line for lane change, etc..

The texture icon of the target object is acquired from the texture database. Optionally, in some implementations, the texture database is stored with a mapping relationship between target objects and texture icons, and a texture icon corresponding to the target object may be found based on the mapping relationship.

At S202, a road guidance graph matching the road guidance type is drawn.

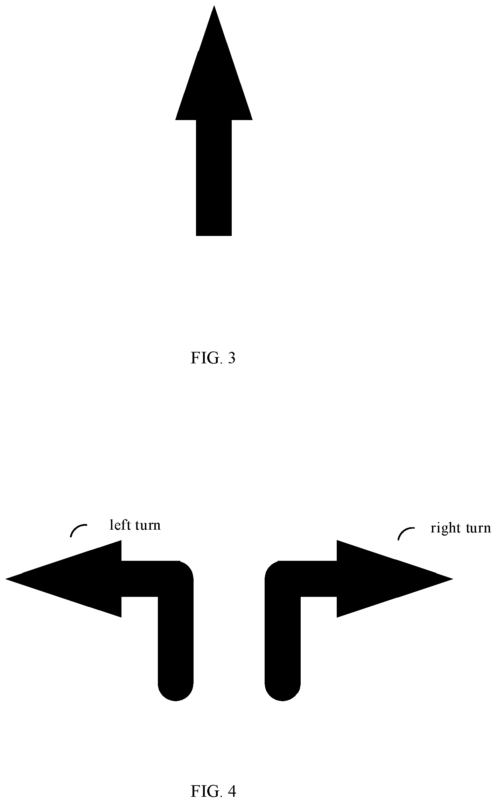

As illustrated in FIG. 3, for example, the road guidance graph is an up arrow in response to the road guidance type being a straight guidance. As illustrated in FIG. 4, for example, the road guidance graph is a left turn arrow or a right turn arrow in response to the road guidance type being a steering guidance.

At S203, the road guidance model is generated by drawing the texture icon in the road guidance graph based on the position of the target object, and 3D rendering is performed on the road guidance model.

The texture icon is drawn in the corresponding road guidance graph and displayed on the position of the target object, thus generating the road guidance model, and the 3D rendering is performed on the road guidance model. For example, in some scenes, a parking space may be displayed in real time by the road guidance model in response to a vehicle performing parking operation in a parking lot.

The 3D rendering process may refer to an introduction of performing 3D rendering on the road guidance data in the above embodiment, which will not be repeated here.

In some implementations, after performing 3D rendering on the road guidance data, the method includes: extracting a set of shape points on a planned route from the navigation data; acquiring a nearest position point to the vehicle on the planned route based on the set of shape points and the position of the vehicle; and mapping the 3D-rendered road guidance model to the image from the nearest position point as a starting point.

Optionally, when the set of shape points is relatively sparse, it may affect judging the nearest position point to the vehicle on the planned route, leading to low accuracy of the nearest position point. Therefore, in order to enhance the accuracy of the acquired position point, data enhancement may be performed on the set of shape points, that is, interpolation calculation may be performed on the set of shape points, thus acquiring a set of enhanced shape points for the planned route, and acquiring the nearest position point from the set of enhanced shape points.

In the embodiment of the disclosure, the target object that needs to be displayed in the road guidance model is determined based on the road guidance data, and the texture icon of the target object is acquired from the texture database, and the road guidance graph matching the road guidance type is drawn, and the road guidance model is generated by drawing the texture icon in the road guidance graph based on the position of the target object, and 3D rendering is performed on the road guidance model. In the embodiment of the disclosure, a virtual reality effect is constructed, which improves the accuracy of road guidance, enhances the visual effect, enhances the driving safety, and that the user has a better experience.

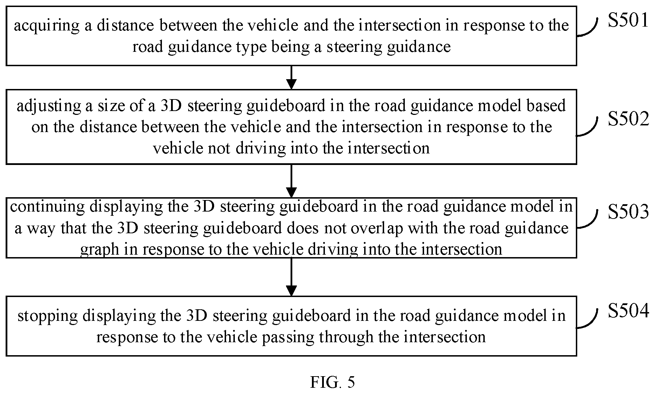

FIG. 5 is a flowchart illustrating a method for road guidance according to an embodiment of the present disclosure. As illustrated in FIG. 5, on the basis of the above embodiment, performing 3D rendering on the road guidance data and visually displaying the road guidance data in an image collected by the vehicle for road guidance includes the following steps at S501-S504:
At S501, a distance between the vehicle and the intersection is acquired in response to the road guidance type being a steering guidance.

The introduction of the road guidance type may refer to the relevant content of the above embodiment.

The distance between the vehicle and the intersection is acquired based on the driving data and the navigation data in response to determining that the road guidance type is a steering guidance.

At S502, a size of a 3D steering guideboard in the road guidance model is adjusted based on the distance between the vehicle and the intersection in response to the vehicle not driving into the intersection.

The 3D steering guideboard of the intersection is determined based on the type of the intersection. For example, the 3D steering guideboard is a left turn graph in response to the road type being a left turn.

The 3D steering guideboard starts to be displayed in response to the distance between a vehicle and an intersection being a set value before the vehicle drives into an intersection, and as the distance gradually decreases, the 3D steering guideboard in the road guidance model is adjusted to have a gradually increased size. Optionally, in the embodiment of the disclosure, the 3D steering guideboard starts to display in response to the distance between a vehicle and an intersection being 60m.

At S503, the 3D steering guideboard continues to be displayed in the road guidance model in a way that the 3D steering guideboard does not overlap with the road guidance graph in response to the vehicle driving into the intersection.

The 3D steering guideboard continues to be displayed in the road guidance model in response to the position of the vehicle overlapping with the point position of the intersection when the vehicle drives into the intersection.

Since lane change may be performed during the steering process, that is, other type of road guidance may be performed when the vehicle turns, in order to enhance the user experience and avoid misunderstanding, it is maintained that the 3D steering guideboard does not overlap with the road guidance graph.

At S504, the 3D steering guideboard is not displayed in the road guidance model in response to the vehicle passing through the intersection.

When the vehicle passes through the intersection, indicating that the steering of vehicle ends, the 3D steering guideboard of the intersection disappears in the road guidance model.

In some scenes, when the vehicle needs to be steered at a plurality of continuous intersections, the road guidance model is continuously displayed during the steering process, and a 3D steering guideboard at a current steering intersection is displayed in the plurality of continuous intersections in the road guidance model based on a position sequence of the plurality of continuous intersections. In other words, a 3D steering guideboard at the intersection where the steering has been over disappears in the road guidance model, and a 3D steering guideboard of a next intersection is acquired for display in the road guidance model, in response to the steering of one intersection in the plurality of continuous intersections being off.

In the embodiment of the disclosure, a distance between the vehicle and the intersection is acquired in response to the road guidance type being the steering guidance, and the size of the 3D steering guideboard in the road guidance model is adjusted based on the distance between the vehicle and the intersection in response to the vehicle not driving into the intersection, and the 3D steering guideboard continues to be displayed in the road guidance model in a way that the 3D steering guideboard does not overlap with the road guidance graph in response to the vehicle driving into the intersection, and the 3D steering guideboard is not displayed in the road guidance model in response to the vehicle passing through the intersection. In the embodiment of the disclosure, a virtual reality effect is constructed, which improves the accuracy of road guidance, enhances the visual effect, enhances the driving safety, and the user has a better experience.

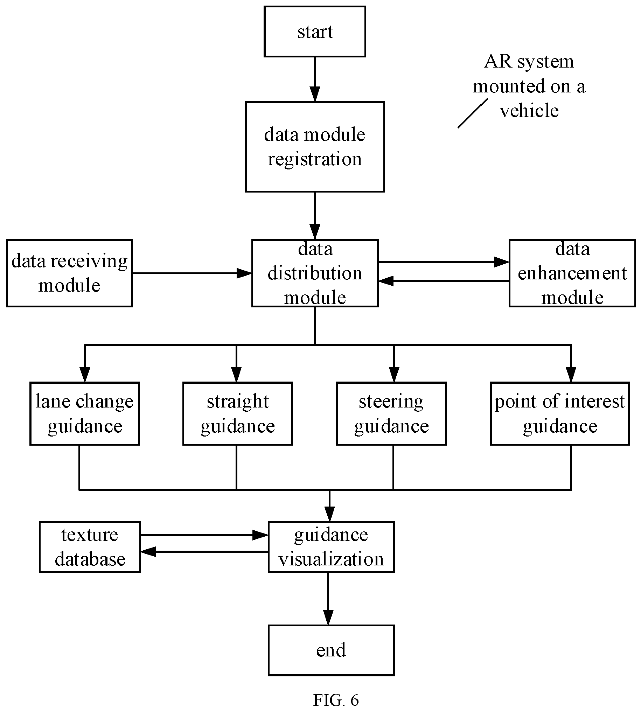

The introduction of a method for road guidance in the embodiment of the disclosure is performed below in combination with FIG. 6. As illustrated in FIG. 6, in the embodiment of the present disclosure, road guidance is achieved by an AR system mounted on the vehicle. A data module is registered first after the AR system of the vehicle is started, that is, a data monitoring module is registered. The data monitoring module is configured to activate a data receiving module and a data distribution module. The data receiving module transmits the received driving data and navigation data to the data distribution module, and the data distribution module pushes the received data to a data enhancement module for enhancement processing. The enhanced data is classified to facilitate subsequent processing selectively for different road guidance types, the road guidance type including a lane change guidance, a straight or steering guidance, or a point of interest guidance. A guidance visualization module performs 3D rendering on the road guidance data for different road guidance types, and performs visual display in combination with the texture icon provided by a texture database. In this way, the road guidance is achieved.

In the embodiment of the disclosure, various types of road guidance data may be provided to construct a virtual reality effect, thus causing to display data more intuitively and easier to understand. The virtual road guidance data and the actual scene are combined to enhance visual effect, thus enhancing driving safety and causing that the user has a better experience.

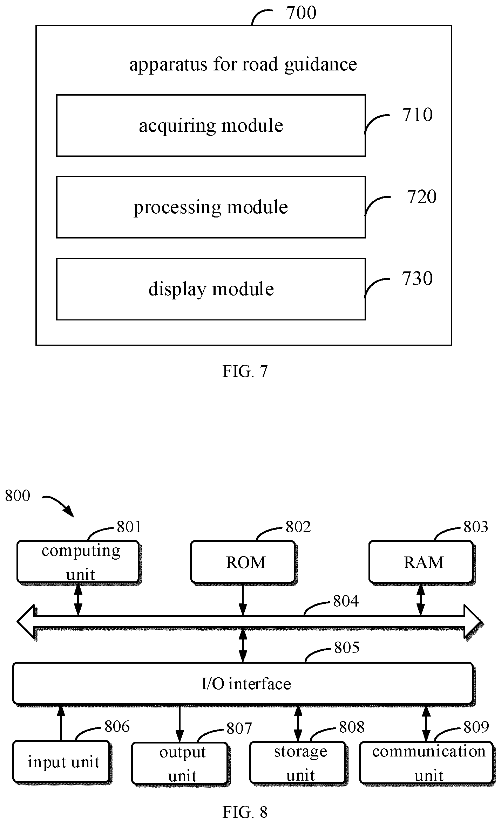

FIG. 7 is a structure diagram illustrating an apparatus for road guidance according to an embodiment of the present disclosure. As illustrated in FIG. 7, the apparatus 700 for road guidance includes an acquiring module 710, a processing module 720, and a display module 730.

The acquiring module 710 is configured to acquire driving data and navigation data of a vehicle. The processing module 720 is configured to determine a road guidance type of the vehicle based on the driving data and the navigation data, and generate road guidance data corresponding to the road guidance type. The display module 730 is configured to perform 3D rendering on the road guidance data, and visually display the road guidance data in an image collected by the vehicle for road guidance.

In the embodiment of the disclosure, the road guidance type of the vehicle is determined based on the driving data and the navigation data, so as to subsequently acquire road guidance data corresponding to the road guidance type and construct a virtual reality effect, which improves the accuracy of road guidance, enhances the visual effect, and the user has a better experience.

It needs to be noted that the foregoing explanation of the method embodiment for road guidance is also applied to an apparatus for road guidance in the embodiment, which will not be repeated here.

Further, in a possible implementation of the embodiment of the disclosure, the display module 730 is further configured to: determine a target object that needs to be displayed in a road guidance model based on the road guidance data, and acquire a texture icon of the target object from a texture database; draw a road guidance graph matching the road guidance type; and generate the road guidance model by drawing the texture icon in the road guidance graph based on the position of the target object, and perform 3D rendering on the road guidance model.

Further, in a possible implementation of the embodiment of the disclosure, the processing module 720 is further configured to: determine an actual lane line where the vehicle is located based on the driving data; determine a planned driving direction of the vehicle based on the navigation data; and determine that the road guidance type of the vehicle is a lane change guidance in response to the actual lane line deviating from the planned driving direction.

Further, in a possible implementation of the embodiment of the disclosure, the processing module 720 is further configured to: acquire a turning point and curve information for lane change based on the driving data and the navigation data; determine the turning point, the curve information for lane change and the navigation data as the road guidance data of the vehicle.

Further, in a possible implementation of the embodiment of the disclosure, the processing module 720 is further configured to: determine whether a forward position of the vehicle is an intersection and a type of the intersection based on the driving data and the navigation data; determine the road guidance type as a straight guidance in response to the type of the intersection being a straight type; and determine the road guidance type as a steering guidance in response to the type of the intersection being a non-straight guidance.

Further, in a possible implementation of the embodiment of the disclosure, the processing module 720 is further configured to: determine that a forward position of the vehicle is a specified position based on the driving data and the navigation data, and determine a road guidance type of the specified position as a point of interest guidance.

Further, in a possible implementation of the embodiment of the disclosure, the processing module 720 is further configured to: determine a first coordinate of a driving position of the vehicle based on the driving data; determine a second coordinate of the forward position of the vehicle based on the navigation data; generate a computer visual coordinate by performing coordination conversion on the first coordinate and/or the second coordinate; and determine the computer visual coordinate and the navigation data as the road guidance data.

Further, in a possible implementation of the embodiment of the disclosure, the display module 730 is further configured to: acquire a distance between the vehicle and the intersection in response to the road guidance type being a steering guidance, and adjust a size of a 3D steering guideboard in the road guidance model based on the distance between the vehicle and the intersection in response to the vehicle not driving into the intersection, and continue displaying the 3D steering guideboard in the road guidance model in a way that the 3D steering guideboard does not overlap with the road guidance graph in response to the vehicle driving into the intersection, and stop display of the 3D steering guideboard in the road guidance model in response to the vehicle passing through the intersection.

Further, in a possible implementation of the embodiment of the disclosure, during the steering process, the display module 730 is further configured to: continuously display the road guidance model and display a 3D steering guideboard of a current steering intersection from the plurality of continuous intersections one by one in the road guidance model based on a position sequence of the plurality of continuous intersections.

Further, in a possible implementation of the embodiment of the disclosure, the display module 730 is further configured to: in response to the steering at one of the plurality of continuous intersections being over, stop display of a 3D steering guideboard of the intersection where the steering has been over in the road guidance model, and display a 3D steering guideboard of a next intersection in the road guidance model.

Further, in a possible implementation of the embodiment of the disclosure, the display module 730 is further configured to: determine a 3D steering guideboard of the intersection based on the type of the intersection.

Further, in a possible implementation of the embodiment of the disclosure, the display module 730 is further configured to: extract a set of shape points on a planned route from the navigation data; acquire a nearest position point to the vehicle on the planned route based on the set of shape points; and map the 3D-rendered road guidance model to the image from the nearest position point as a starting point.

Further, in a possible implementation of the embodiment of the disclosure, the display module 730 is further configured to: acquire a set of enhanced shape points for the planned route by performing data enhancement on the set of shape points; and acquire the nearest position point from the set of enhanced shape points.

According to the embodiment of the disclosure, the disclosure further provides an electronic device, a readable storage medium and a computer program product.

FIG. 8 illustrates a block diagram of an example electronic device 800 configured to execute the embodiment of the disclosure. An electronic device is intended to represent various types of digital computers, such as laptop computers, desktop computers, workstations, personal digital assistants, servers, blade servers, mainframe computers, and other suitable computers. An electronic device may also represent various types of mobile apparatuses, such as personal digital assistants, cellular phones, smart phones, wearable devices, and other similar computing devices. The components shown herein, their connections and relations, and their functions are merely examples, and are not intended to limit the implementation of the disclosure described and/or required herein.

As illustrated in FIG. 8, the device 800 includes a computing unit 801, which may execute various appropriate actions and processes based on a computer program stored in a read-only memory (ROM) 802 or a computer program loaded into a random access memory (RAM) 803 from a storage unit 808. In the RAM 803, various programs and data required for operation of the device 800 may also be stored. The computing unit 801, the ROM 802 and the ROM 803 may be connected with each other by a bus 804. An input/output (I/O) interface 805 is also connected to the bus 804.

A plurality of components in the device 800 are connected to the I/O interface 805, and includes: an input unit 806, for example, a keyboard, a mouse, etc.; an output unit 807, for example various types of displays, speakers; a storage unit 808, for example a magnetic disk, an optical disk; and a communication unit 809, for example, a network card, a modem, a wireless transceiver. The communication unit 809 allows the device 800 to exchange information/data through a computer network such as internet and/or various types of telecommunication networks and other devices.

The computing unit 801 may be various types of general and/or dedicated processing components with processing and computing ability. Some examples of the computing unit 801 include but not limited to a central processing unit (CPU), a graphs processing unit (GPU), various dedicated artificial intelligence (AI) computing chips, various computing units running a machine learning model algorithm, a digital signal processor (DSP), and any appropriate processor, controller, microcontroller, etc. The computing unit 801 executes various methods and processes as described above, for example, a method for road guidance. For example, in some embodiments, the method for road guidance may be further achieved as a computer software program, which is physically contained in a machine readable medium, such as the storage unit 808. In some embodiments, a part or all of computer programs may be loaded and/or mounted on the device 800 via the ROM 802 and/or the communication unit 809. When the computer program is loaded on the RAM 803 and executed by the computing unit 801, one or more steps in the method for road guidance as described above may be performed. Alternatively, in other embodiments, a computing unit 801 may be configured to perform a method for road guidance in other appropriate ways (for example, by virtue of a firmware).

Various implementation modes of the systems and technologies described above may be implemented in a digital electronic circuit system, a field programmable gate array (FPGA), an application-specific integrated circuit (ASIC), an application specific standard product (ASSP), a system-on-chip (SOC) system, a complex programmable logic device, a computer hardware, a firmware, a software, and/or combinations thereof. The various implementation modes may include: being implemented in one or more computer programs, and the one or more computer programs may be executed and/or interpreted on a programmable system including at least one programmable processor, and the programmable processor may be a dedicated or a general-purpose programmable processor that may receive data and instructions from a storage system, at least one input apparatus, and at least one output apparatus, and transmit the data and instructions to the storage system, the at least one input apparatus, and the at least one output apparatus.

A computer code configured to execute a method in the present disclosure may be written with one or any combination of a plurality of programming languages. The programming languages may be provided to a processor or a controller of a general purpose computer, a dedicated computer, or other apparatuses for programmable data processing so that the function/operation specified in the flowchart and/or block diagram may be performed when the program code is executed by the processor or controller. A computer code may be performed completely or partly on the machine, performed partly on the machine as an independent software package and performed partly or completely on the remote machine or server.

In the context of the disclosure, a machine-readable medium may be a tangible medium that may contain or store a program intended for use in or in conjunction with an instruction execution system, apparatus, or device. A machine readable medium may be a machine readable signal medium or a machine readable storage medium. A machine readable storage medium may include but not limited to an electronic, magnetic, optical, electromagnetic, infrared, or semiconductor system, apparatus or device, or any appropriate combination thereof. A more specific example of a machine readable storage medium includes an electronic connector with one or more cables, a portable computer disk, a hardware, a random access memory (RAM), a read-only memory (ROM), an erasable programmable read-only memory (an EPROM or a flash memory), an optical fiber device, and a portable optical disk read-only memory (CDROM), an optical storage device, a magnetic storage device, or any appropriate combination of the above.

In order to provide interaction with the user, the systems and technologies described here may be implemented on a computer, and the computer has: a display apparatus for displaying information to the user (for example, a CRT (cathode ray tube) or a LCD (liquid crystal display) monitor); and a keyboard and a pointing apparatus (for example, a mouse or a trackball) through which the user may provide input to the computer. Other types of apparatuses may further be configured to provide interaction with the user; for example, the feedback provided to the user may be any form of sensory feedback (for example, visual feedback, auditory feedback, or tactile feedback); and input from the user may be received in any form (including an acoustic input, a voice input, or a tactile input).

The systems and technologies described herein may be implemented in a computing system including back-end components (for example, as a data server), or a computing system including middleware components (for example, an application server), or a computing system including front-end components (for example, a user computer with a graphic user interface or a web browser through which the user may interact with the implementation mode of the system and technology described herein), or a computing system including any combination of such back-end components, middleware components or front-end components. The system components may be connected to each other through any form or medium of digital data communication (for example, a communication network). Examples of communication networks include: a local area network (LAN), a wide area network (WAN), a blockchain network, and an internet.

The computer system may include a client and a server. The client and server are generally far away from each other and generally interact with each other through a communication network. The relationship between the client and the server is generated by computer programs running on the corresponding computer and having a client-server relationship with each other. A server may be a cloud server, and further may be a server of a distributed system, or a server in combination with a blockchain.

It should be understood that, various forms of procedures shown above may be configured to reorder, add or delete steps. For example, steps described in the disclosure may be executed in parallel, sequentially, or in different orders, as long as the desired result of the technical solution disclosed in the present disclosure may be achieved, which will not be limited herein.

## Claims

1. A method for road guidance, comprising:
acquiring (S101) driving data and navigation data of a vehicle;
determining (S102) a road guidance type of the vehicle based on the driving data and the navigation data, and generating road guidance data corresponding to the road guidance type; and
performing (S103) 3D rendering on the road guidance data, and visually displaying the road guidance data in an image collected by the vehicle for road guidance.

2. The method of claim 1, wherein, performing 3D rendering on the road guidance data comprises:
determining (S201) an object that needs to be displayed in a road guidance model based on the road guidance data, and acquiring a texture icon of the object from a texture database, wherein the object is configured to indicate a display position of a road guidance graph matching the road guidance type in the road guidance model;
drawing (S202) the road guidance graph matching the road guidance type at the display position of the object; and
generating (S203) the road guidance model by drawing the texture icon on the road guidance graph based on the display position of the object, and performing 3D rendering on the road guidance model.

3. The method of claim 2, wherein, determining the road guidance type of the vehicle comprises:
determining a lane line where the vehicle is located based on the driving data; determining a planned driving direction of the vehicle based on the navigation data; and
determining that the road guidance type of the vehicle is a lane change guidance in response to the lane line deviating from the planned driving direction.

4. The method of claim 3, wherein, generating road guidance data corresponding to the road guidance type comprises:
acquiring a turning point and curve information for lane change based on the driving data and the navigation data; and
determining the turning point, the curve information and the navigation data as the road guidance data of the vehicle.

5. The method of claim 2, wherein, determining the road guidance type of the vehicle comprises:
in response to a forward position of the vehicle being an intersection,
determining a type of the intersection based on the driving data and the navigation data; determining that the road guidance type is a straight guidance in response to the type of the intersection being a straight type; and determining that the road guidance type is a steering guidance in response to the type of the intersection being a non-straight guidance.

6. The method of claim 2, wherein, determining the road guidance type of the vehicle comprises:
in response to a forward position of the vehicle being a specified position based on the driving data and the navigation data, determining a road guidance type of the specified position as a point of interest guidance.

7. The method of claim 5 or 6, wherein, generating road guidance data corresponding to the road guidance type comprises:
determining a first coordinate of a driving position of the vehicle based on the driving data;
determining a second coordinate of the forward position of the vehicle based on the navigation data;
generating a computer visual coordinate by performing coordination conversion on at least one of the first coordinate and the second coordinate; and
determining the computer visual coordinate and the navigation data as the road guidance data.

8. The method of claim 7, wherein, performing 3D rendering on the road guidance data, and visually displaying the road guidance data in an image collected by the vehicle comprises:
acquiring (S501) a distance between the vehicle and the intersection in response to the road guidance type being the steering guidance;
adjusting (S502) a size of a 3D steering guideboard in the road guidance model based on the distance between the vehicle and the intersection in response to the vehicle not driving into the intersection;
displaying (S503) the 3D steering guideboard in the road guidance model in a way that the 3D steering guideboard does not overlap with the road guidance graph in response to the vehicle driving into the intersection; and
stopping (S504) display of the 3D steering guideboard in the road guidance model in response to the vehicle passing through the intersection.

9. The method of claim 8, wherein, in response to steering at a plurality of continuous intersections, the method further comprising:
continuously displaying the road guidance model during the steering process, and displaying a 3D steering guideboard at a current intersection from the plurality of continuous intersections in the road guidance model one by one based on a position sequence of the plurality of continuous intersections.

10. The method of claim 9, wherein, displaying the 3D steering guideboard of the current intersection from the plurality of continuous intersections one by one, comprises:
in response to the steering at one of the plurality of continuous intersections being over, stopping display of a 3D steering guideboard of the intersection where the steering has been over in the road guidance model, and displaying a 3D steering guideboard of a next intersection in the road guidance model.

11. The method of claim 8, further comprising:
determining a 3D steering guideboard of the intersection based on the type of the intersection.

12. The method of claim 2, after performing 3D rendering on the road guidance data, the method comprises:
extracting a set of shape points on a planned route from the navigation data;
acquiring a nearest position point to the vehicle on the planned route based on the set of shape points; and
mapping the 3D-rendered road guidance model to the image from the nearest position point as a starting point.

13. The method of claim 12, wherein, acquiring the nearest position point to the vehicle on the planned route comprises:
acquiring a set of enhanced shape points for the planned route by performing data enhancement on the set of shape points; and
acquiring the nearest position point from the set of enhanced shape points.

14. An apparatus for road guidance, comprising:
an acquiring module (710), configured to acquire driving data and navigation data of a vehicle;
a processing module (720), configured to determine a road guidance type of the vehicle based on the driving data and the navigation data, and generate road guidance data corresponding to the road guidance type; and
a display module (730), configured to perform 3D rendering on the road guidance data, and visually display the road guidance data in an image collected by the vehicle for road guidance.

15. A non-transitory computer readable storage medium having computer
instructions stored thereon, wherein when the computer instructions are executed by a computer, the computer is caused to perform the method of any of claims 1 to 13.
